# EUROPÄISCHE PATENTSCHRIFT

(11) **EP 3 478 541 B1**
(45) Veröffentlichungstag und Bekanntmachung des Hinweises auf die Patenterteilung: **28.09.2022**
(21) Anmeldenummer: 17725512.2
(22) Anmeldetag: 15.05.2017
(51) Int. Cl.: B60R 25/24, G07C 9/00

(54) **SICHERHEITSEINRICHTUNG UND VERFAHREN ZUM BETREIBEN EINES SYSTEMS**
SECURITY DEVICE AND METHOD FOR OPERATING A SYSTEM
DISPOSITIF DE SÉCURITÉ ET PROCÉDÉ POUR FAIRE FONCTIONNER UN SYSTÈME

(30) Priorität: 04.07.2016 DE 102016008010
(43) Veröffentlichungstag der Anmeldung: 08.05.2019
(73) Patentinhaber: SEW-EURODRIVE GmbH & Co. KG, 76646 Bruchsal (DE)
(72) Erfinder: RITSCHEL, Andreas, 76706 Dettenheim (DE); NORENBURG, Benjamin, 76689 Karlsdorf-Neuthard (DE); SENFT, Christian, 76185 Karlsruhe-Grünwettersbach (DE); RICHTER, Sebastian, 69120 Heidelberg (DE); MECKELNBURG, Inga, 67117 Limburgerhof (DE)
(86) Internationale Anmeldenummer: PCT/EP2017/025129
(87) Internationale Veröffentlichungsnummer: WO 2018/007015

(56) Entgegenhaltungen:
- Anonymous: "Smart key - Wikipedia, the free encyclopedia", , 20. Oktober 2012 (2012-10-20), XP055108304, Gefunden im Internet: URL:http://en.wikipedia.org/w/index.php?ti tle=Smart_key&direction=next&oldid=5167509 02 [gefunden am 2014-03-17]

## Beschreibung

Die Erfindung betrifft ein Gesamtsystem **mit einer Sicherheitseinrichtung**

Es ist bekannt, dass Eigenschaften einer Sicherheitseinrichtung über ein Parametriergerät veränderbar sind.

Es ist weiter bekannt, dass von einem Parametriergerät ein Parameterdatensatz sowie eine Prüfsummeninformation dieses Parameterdatensatzes, typischerweise zum Aufdecken von Fehlern beim Austausch von Daten, auf eine Sicherheitseinrichtung übertragbar sind.

Es ist weiter bekannt, dass nach einem Tausch einer bereits parametrierten Sicherheitseinrichtung die getauschte Sicherheitseinrichtung erneut parametriert werden muss.

Aus der DE 10 2008 045 476 A1 ist auch bekannt, dass einzelne Komponenten eines Systems untereinander Informationen austauschen.

Aus der DE 103 50 715 A1 ist ein Verfahren zum Speichern von Parameterwerten auf einem internen und/oder externen Datenspeicher bekannt.

Aus der DE 199 61 920 B4 ist ein Verfahren zur Fern-Parametrierung und/oder Fernbedienung eines Antriebssystems bekannt.

**Aus der Veröffentlichung** Anonymous: "Smart key - Wikipedia, the free encyclopedia" 20. Oktober 2012, XP055108304 **ist als nächstliegender Stand der Technik ein Smart key bekannt.**

Der Erfindung liegt daher die Aufgabe zugrunde die Stillstandsdauer einer Produktionsanlage und somit die wirtschaftlichen Kosten zu minimieren, indem ein einfacher und zeitoptimierter Gerätetausch einer Sicherheitseinrichtung möglich ist.

Erfindungsgemäß wird die Aufgabe **mit einem Gesamtsystem** mit einer Sicherheitseinrichtung nach den in Anspruch 1, angegebenen Merkmalen gelöst.

Wichtige Merkmale bei der Sicherheitseinrichtung, insbesondere als Teil eines elektronischen Leistungsantriebssystems mit einstellbarer Drehzahl, das für den Einsatz in sicherheits-gerichteten Anwendungen geeignet ausgeführt ist, sind, dass sie aufweist:
- mindestens ein nicht flüchtiges Speicherelement, welches insbesondere einen Parameterdatensatz zum Betreiben dieser Sicherheitseinrichtung enthält,
- einen Schlüsselspeicher,
   wobei der Schlüsselspeicher mindestens ein nicht flüchtiges Speicherelement besitzt,
   wobei dieses Speicherelement mindestens ein Datenfeld enthält, welches insbesondere eine Prüfsummeninformation einer Sicherheitseinrichtung beinhaltet,
   wobei die Sicherheitseinrichtung eine physikalische Schnittstelle für den Datenaustausch mit einem Schlüsselspeicher zur Verfügung stellt,
   wobei die Reichweite der physikalischen Schnittstelle räumlich begrenzt ist, insbesondere sich nur auf die unmittelbare Nähe um die Sicherheitseinrichtung bezieht,
   wobei der Schlüsselspeicher ortsgebunden, insbesondere räumlich mit einem spezifischen Punkt innerhalb eines Gesamtsystems fest zuordenbar, ist,
   wobei die Sicherheitseinrichtung mindestens eine Berechnungseinheit besitzt, die insbesondere die Prüfsummeninformation aus dem Parameterdatensatz dynamisch ermittelt,
   wobei die Sicherheitseinrichtung mindestens eine Vergleichseinheit besitzt, die insbesondere die im Schlüsselspeicher enthaltene Prüfsummeninformation mit der dynamisch berechneten Prüfsummeninformation der Sicherheitseinrichtung vergleicht, und das Ergebnis der Sicherheitseinrichtung als Freigabeinformation zur Verfügung stellt,
   wobei der Betriebszustand der Sicherheitseinrichtung von dieser Freigabeinformation der Vergleichseinheit abhängt,
   wobei eine Freigabeinformation, die die Gleichheit der Prüfsummeninformationen signalisiert, die Sicherheitseinrichtung befähigt, von einem sicheren Betriebszustand in den normalen Betriebszustand, insbesondere in einen Zustand mit drehmomentbehaftetem Elektromotor, zu wechseln,
   und wobei eine Freigabeinformation, die die Ungleichheit der Prüfsummeninformationen signalisiert, die Sicherheitseinrichtung befähigt, in einen sicheren Betriebszustand, insbesondere in einen Zustand mit drehmomentlosem Elektromotor, zu wechseln.

Von Vorteil ist dabei, dass das System den sicheren Betriebszustand nur verlassen kann, wenn die im externen Schlüsselspeicher abgelegte Prüfsummeninformation mit der Prüfsummeninformation des Parameterdatensatzes der Sicherheitseinrichtung identisch sind.

In der vorliegenden Erfindung wird das Problem einer erneuten Parametrierung beim Tausch einer, typischerweise defekten, Sicherheitseinrichtung dadurch gelöst, dass bei Erstinbetriebnahme und/oder bei jeder weiteren Änderung der Einstellparameter dieser Sicherheitseinrichtung über ein Parametriergerät die Einstellparameter zusätzlich auf einem Speichermodul, insbesondere als Bestandteil einer nicht sicheren Systemkomponente, typischerweise einem Umrichter und/oder einer übergeordneten Steuerung und/oder ein mit der Steuerung verbundener PC, gesichert werden.

Von diesem Speichermedium aus sind die Einstellparameter für ein Tauschgerät wiederherstellbar, wobei die getauschte Sicherheitseinrichtung nur mit einem speziell für diese Sicherheitseinrichtung vorgesehenen Parameterdatensatz, der über die Prüfsummeninformation eines externen und ortsgebundenen, insbesondere mit einem spezifischen Punkt in der Anlage fest zuordenbaren, Schlüsselspeichers erkennbar ist, ausführbar ist.

Bei einer vorteilhaften Ausgestaltung ist die Sicherheitseinrichtung direkt mit einem Umrichter (8) verbindbar, insbesondere steckverbindbar,
wobei ein Speichermodul direkt mit dem Umrichter verbunden ist, insbesondere integriert ist. Von Vorteil ist dabei, dass eine einfache Herstellung ausführbar ist.

Bei einer vorteilhaften Ausgestaltung ist die Sicherheitseinrichtung direkt mit einem Umrichter verbindbar, insbesondere steckverbindbar,
wobei der Umrichter über ein Feldbussystem mit einer übergeordneten Steuerung, insbesondere einer speicherprogrammierbaren Steuerung, verbunden ist,
wobei diese übergeordnete Steuerung ein Speichermodul besitzt. Von Vorteil ist dabei, dass eine einfache Herstellung ausführbar ist.

Bei einer vorteilhaften Ausgestaltung ist die Sicherheitseinrichtung über ein Feldbussystem mit einer übergeordneten Steuerung, insbesondere einer speicherprogrammierbaren Steuerung, verbindbar,
wobei diese übergeordnete Steuerung ein Speichermodul besitzt. Von Vorteil ist dabei, dass Daten in einfacher Weise abspeicherbar sind.

Bei einer vorteilhaften Ausgestaltung ist ein Mittel, insbesondere ein Parametriergerät, direkt mit der übergeordneten Steuerung, insbesondere einer speicherprogrammierbaren Steuerung, verbindbar. Von Vorteil ist dabei, dass eine Dateneingabe mittels Parametriergeräts ausführbar ist.

Bei einer vorteilhaften Ausgestaltung ist ein Mittel, insbesondere ein Parametriergerät, über ein Feldbussystem mit dem Umrichter verbindbar. Von Vorteil ist dabei, dass eine einfache Verbindung herstellbar ist.

Bei einer vorteilhaften Ausgestaltung ist ein Mittel, insbesondere ein Parametriergerät, direkt mit dem Umrichter verbindbar. Von Vorteil ist dabei, dass eine einfache Herstellung ermöglicht ist.

Bei einer vorteilhaften Ausgestaltung ist der Parameterdatensatz der Sicherheitseinrichtung über ein Mittel, insbesondere über ein Parametriergerät, veränderbar. Von Vorteil ist dabei, dass eine einfache Dateneingabe ermöglicht ist.

Bei einer vorteilhaften Ausgestaltung ist die berechnete Prüfsummeninformation des Parameterdatensatzes der Sicherheitseinrichtung zusätzlich auch über die Sicherheitseinrichtung in einen Schlüsselspeicher, der direkt mit dieser bestimmten Sicherheitseinrichtung verbunden ist, speicherbar. Von Vorteil ist dabei, dass eine erhöhte Sicherheit erreichbar ist, insbesondere in einfacher Weise.

Bei einer vorteilhaften Ausgestaltung ist dieser Parameterdatensatz der Sicherheitseinrichtung als Schattenkopie über ein Mittel, insbesondere über ein Parametriergerät, in einem Speichermedium außerhalb der Sicherheitseinrichtung speicherbar. Von Vorteil ist dabei, dass die Sicherheit erhöht ist und ein einfacher Tausch ermöglicht ist.

**Erfindungsgemäß** ist der Schlüsselspeicher mit der Sicherheitseinrichtung verbindbar, insbesondere steckverbindbar, über eine Vorrichtung zum Aufnehmen des Schlüsselspeichers durch das Gehäuse der Sicherheitseinrichtung. Von Vorteil ist dabei, dass der Schlüsselspeicher physikalisch mit der Sicherheitseinrichtung verknüpft wird und mit dieser als eine Einheit erkennbar ist, also, dass Schlüsselspeicher und Sicherheitseinrichtung eineindeutig verbunden sind.

**Erfindungsgemäß** ist der Schlüsselspeicher von der Sicherheitseinrichtung über eine elektrisch leitende Verbindung, insbesondere über eine elektrisch leitende Verbindung bestehend aus nur zwei Leitungen, typischerweise als Eindraht-Bus realisiert, auslesbar. Von Vorteil ist dabei, dass dadurch eine platzsparende und kostengünstige Realisierung des Schlüsselspeichers mit nur wenigen Bauteilen realisierbar ist.

Bei einer vorteilhaften Ausgestaltung ist der Schlüsselspeicher von der Sicherheitseinrichtung über eine elektromagnetische Verbindung, insbesondere mit RFID-Technologie realisiert, auslesbar. Von Vorteil ist dabei, dass kostenintensive Steckverbinder verzichtbar sind.

Bei einer vorteilhaften Ausgestaltung ist der Schlüsselspeicher über ein Mittel, insbesondere einer Verbindungskette, fest mit dem Ort verbindbar ist, an dem auch die Sicherheitseinrichtung (1) im Gesamtsystem installiert. Von Vorteil ist dabei, dass der ortsgebundene Bezug des Schlüsselspeichers innerhalb des Gesamtsystems somit betont wird und zusätzlich ein Schutz vor Verlust des Schlüsselspeichers selbst realisierbar ist.

Bei einer vorteilhaften Ausgestaltung besitzt die Sicherheitseinrichtung eine Vorrichtung, mit der der Schlüsselspeicher fest mit der Sicherheitseinrichtung verbindbar ist, insbesondere eine Vorrichtung mit einem Mechanismus zum Verriegeln und Entriegeln der Steckverbindung. Von Vorteil ist dabei, dass aktiv verhinderbar ist, dass sich der Schlüsselspeicher bedingt durch starke Vibrationen von der Sicherheitseinrichtung löst und somit eine Kommunikationsverbindung zwischen Parametriergerät und dieser Sicherheitseinrichtung nicht mehr möglich ist.

Wichtige Merkmale bei dem Verfahren zum Betreiben eines Systems sind, dass das System mindestens eine Sicherheitseinrichtung, mit einem Schlüsselspeicher, einen Umrichter und/oder eine übergeordnete Steuerung mit einem Speichermodul und ein Parametriergerät umfasst, **wobei** über das Parametriergerät der Parameterdatensatz einer Sicherheitseinrichtung erstellbar ist,
wobei über die Berechnungseinheit die Prüfsummeninformation dieses Parameterdatensatzes generierbar und auf den mit dieser Sicherheitseinrichtung verbundenen Schlüsselspeicher übertragbar ist,
und über das Parametriergerät der Parameterdatensatz zusätzlich auf die vorhandenen Speichermodule und über eine Datensicherung auf weitere Sicherheitseinrichtungen übertragbar ist,
und die Sicherheitseinrichtung bei jedem Neustart die auf dem Schlüsselspeicher vorhandene Prüfsummeninformation mit der Prüfsummeninformation des Parameterdatensatzes der Sicherheitseinrichtung vergleicht,
wobei eine Gleichheit beider Prüfsummeninformationen den Zustand betriebsbereit, insbesondere einen Zustand mit drehmomentbehaftetem Elektromotor, ermöglicht,
und wobei eine Ungleichheit beider Prüfsummeninformationen die Sicherheitseinrichtung in einen sicheren Betriebszustand, insbesondere ein Zustand mit drehmomentlosem Elektromotor, versetzt und über ein Mittel einen Fehler signalisiert.

Von Vorteil ist dabei, dass ein validierter Datensatz auf mehrere Geräte übertragbar ist über das Parametriergerät ohne neuen Zertifizierungsaufwand und es muss auch nur ein Datensatz im Speichermedium abgelegt werden.

**Bei einem** Verfahren zum Betreiben eines Systems sind **Merkmale,** dass das System mindestens eine Sicherheitseinrichtung, mit einem Schlüsselspeicher, ein Umrichter und/oder eine übergeordnete Steuerung mit einem Speichermodul und ein Parametriergerät umfasst,
**wobei** die Sicherheitseinrichtung, insbesondere nach einem Defekt, tauschbar ist,
wobei der ortsgebundene Schlüsselspeicher der alten, insbesondere defekten, Sicherheitseinrichtung, mit der neuen Sicherheitseinrichtung verbunden wird,
wobei der Umrichter und/oder die übergeordnete Steuerung den Tausch der Sicherheitseinrichtung erkennt und die im Speichermodul vorhandene Schattenkopie des Parameterdatensatzes in diese Sicherheitseinrichtung, insbesondere selbständig, überträgt,
und die Sicherheitseinrichtung bei jedem Neustart die auf dem Schlüsselspeicher vorhandene Prüfsummeninformation mit der Prüfsummeninformation des Parameterdatensatzes der Sicherheitseinrichtung vergleicht,
wobei eine Gleichheit beider Prüfsummeninformationen den Zustand betriebsbereit, insbesondere einen Zustand mit drehmomentbehaftetem Elektromotor, ermöglicht,
wobei eine Ungleichheit beider Prüfsummeninformationen die Sicherheitseinrichtung in einen sicheren Betriebszustand, insbesondere ein Zustand mit drehmomentlosem Elektromotor, versetzt und über ein Mittel einen Fehler signalisiert. Von Vorteil ist dabei, dass sichergestellt wird, dass die Sicherheitseinrichtung nur mit korrektem Parameterdatensatz wiederanlaufen kann. Auch ein Nichtsicheres System kann somit den Parameterdatensatz für ein sicheres System zur Wiederherstellung bei einem Gerätetausch oder ähnlichem zur Verfügung stellen.

**Bei einem** Verfahren zum Betreiben eines Systems sind **Merkmale,** dass das System mindestens eine Sicherheitseinrichtung, mit einem Schlüsselspeicher, ein Umrichter und/oder eine übergeordnete Steuerung mit einem Speichermodul und ein Parametriergerät umfasst,
**wobei** die Sicherheitseinrichtung, insbesondere nach einem Defekt, tauschbar ist,
wobei der ortsgebundene Schlüsselspeicher der alten, insbesondere defekten, Sicherheitseinrichtung, mit der neuen Sicherheitseinrichtung verbunden wird,
wobei über das Parametriergerät ein, aus einer zeitlich zuvor ausgeführten Datensicherung zur Verfügung stehender, Parameterdatensatz in diese Sicherheitseinrichtung übertragbar ist,
und die Sicherheitseinrichtung bei jedem Neustart die auf dem Schlüsselspeicher vorhandene Prüfsummeninformation mit der Prüfsummeninformation des Parameterdatensatzes der Sicherheitseinrichtung vergleicht,
wobei eine Gleichheit beider Prüfsummeninformationen den Zustand betriebsbereit, insbesondere einen Zustand mit drehmomentbehaftetem Elektromotor, ermöglicht,
wobei eine Ungleichheit beider Prüfsummeninformationen die Sicherheitseinrichtung in einen sicheren Betriebszustand, insbesondere ein Zustand mit drehmomentlosem Elektromotor, versetzt und über ein Mittel einen Fehler signalisiert.

Von Vorteil ist dabei, dass sichergestellt wird, dass die Sicherheitseinrichtung nur mit korrektem Parameterdatensatz wiederanlaufen kann. Auch ein Nichtsicheres System kann somit den Parameterdatensatz für ein sicheres System zur Wiederherstellung bei einem Gerätetausch oder ähnlichem zur Verfügung stellen.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

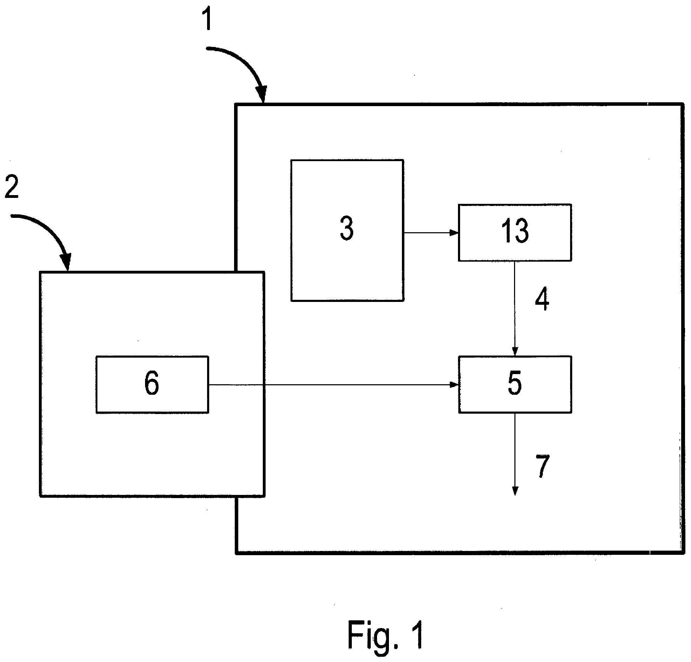

In der Figur 1 ist eine erfindungsgemäße Sicherheitseinrichtung (1) schematisch skizziert, wobei die Sicherheitseinrichtung (1) mit dem Schlüsselspeicher (2) elektrisch verbunden, insbesondere steckverbunden ist, wobei der Schlüsselspeicher (2) ein Speicherelement (6) für Prüfsummeninformation enthält, wobei das Speicherelement (6) von der Sicherheitseinrichtung (1) auslesbar ist.

Außerdem enthält die Sicherheitseinrichtung (1) ein Speicherelement (3) für Parameterdatensätze, eine Berechnungseinheit (13) für die dynamische Ermittlung der Prüfsummeninformation (4) dieser Parameterdatensätze und eine Vergleichseinheit (5), die die dynamisch berechnete Prüfsummeninformation (4) des Parameterdatensatzes und die Prüfsummeninformation (6) des Schlüsselspeichers (2) auswertet und das Ergebnis als Freigabeinformation (7) der Sicherheitseinrichtung (1) zur Verfügung stellt.

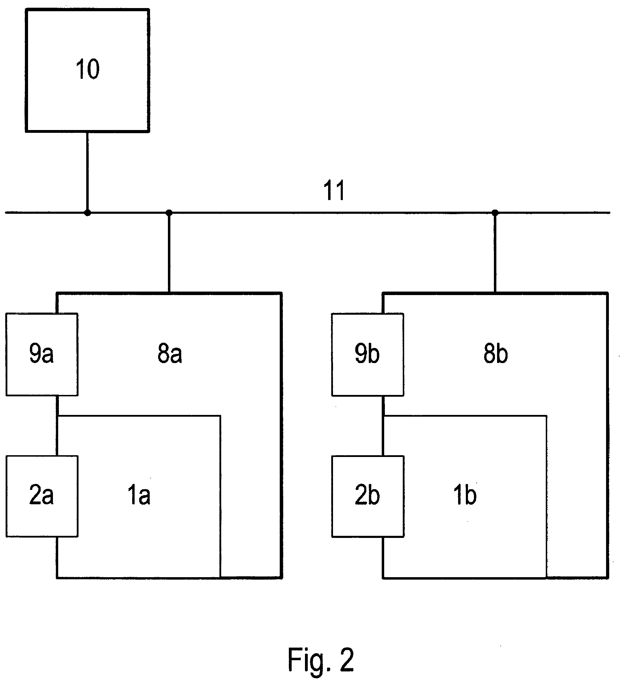

Im Weiteren sind in den Figuren 2 bis 4 erfindungsgemäße Sicherheitseinrichtungen in einem System aus Automatisierungskomponenten schematisch skizziert, wobei eine erste Sicherheitseinrichtung (1a) mit einem ersten Schlüsselspeicher (2a) elektrisch verbunden, insbesondere steckverbunden ist, und wobei eine weitere Sicherheitseinrichtung (1b) mit einem weiteren Schlüsselspeicher (2b) elektrisch verbunden, insbesondere steckverbunden ist.

In den Figuren 2 und 3 sind Sicherheitseinrichtungen (1a, 1b) über je einen Umrichter (8a, 8b) mit einem Feldbussystem (11) elektrisch verbunden, insbesondere steckverbunden.

In Figur 4 sind die Sicherheitseinrichtungen (1a, 1b) direkt mit einem Feldbussystem (11) elektrisch, insbesondere steckverbunden.

In Figur 2 ist je ein Speichermodul (9a, 9b) direkt mit den Umrichtern (8a, 8b) elektrisch verbunden, insbesondere steckverbunden, und ein Parametriergerät (10) direkt mit einem Feldbussystem (11) elektrisch verbunden, insbesondere steckverbunden.

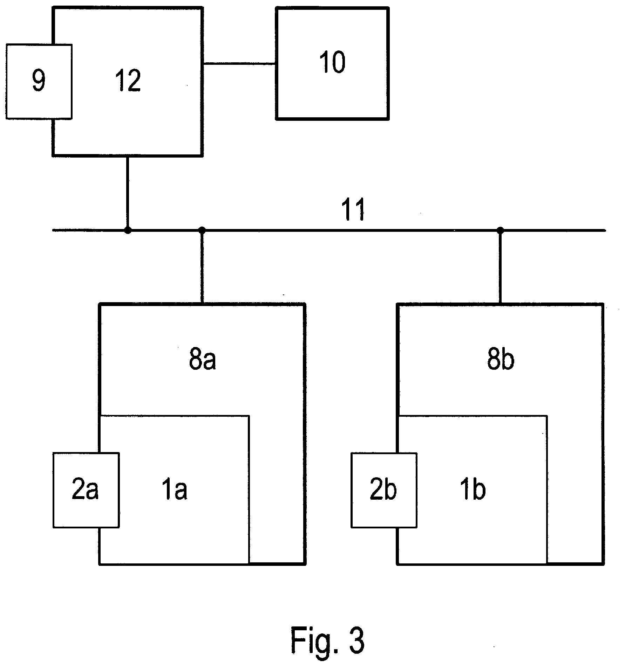

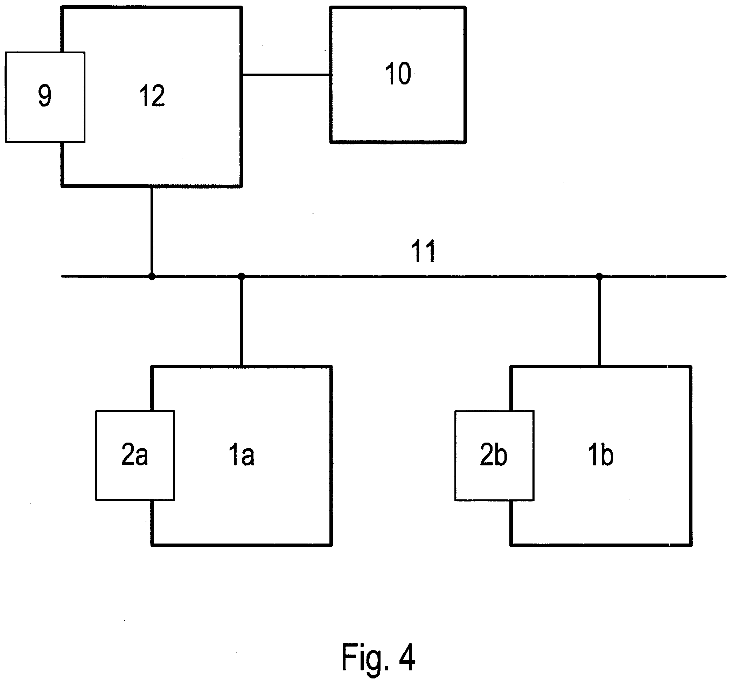

In den Figuren 3 und 4 ist ein Speichermodul (9) direkt mit einer übergeordneten Steuerung (12) elektrisch verbunden, insbesondere steckverbunden, wobei die übergeordnete Steuerung (12) direkt mit einem Feldbussystem (11) elektrisch verbunden, insbesondere steckverbunden ist. Außerdem ist ein Parametriergerät (10) direkt mit der übergeordneten Steuerung (12) elektrisch verbunden, insbesondere steckverbunden.

### Bezugszeichenliste:

- (1, 1a, 1b): Sicherheitseinrichtung
- (2, 2a, 2b): Schlüsselspeicher, steckbar und ortsfest
- (3): Speicherelement für Parameterdatensatz
- (4): Prüfsummeninformation des Parameterdatensatzes
- (5): Vergleichseinheit
- (6): Speicherelement für Prüfsummeninformation des Schlüsselspeichers
- (7): Freigabeinformation der Vergleichseinheit
- (8, 8a, 8b): Umrichter
- (9, 9a, 9b): Speichermodul, steckbar oder integriert
- (10): Parametriergerät
- (11): Feldbussystem, insbesondere PROFINET, PROFIBUS, EtherNet/IP oder einem vergleichbaren dem Stand der Technik entsprechenden Kommunikationsprotokoll
- (12): Übergeordnete Steuerung, insbesondere eine speicherprogrammierbare Steuerung (SPS; englisch: Programmable Logic Controller, PLC)
- (13): Berechnungseinheit für Prüfsummeninformation

## Patentansprüche

1. **Gesamtsystem, in welchem eine Sicherheitseinrichtung (1), ein Schlüsselspeicher (2), ein Umrichter (8), ein Speichermodul (9), ein Feldbussystem (11), ein Parametriergerät (10) und eine übergeordnete Steuerung (12) angeordnet sind,**
**wobei die Sicherheitseinrichtung (1) als** Teil eines elektronischen Leistungsantriebssystems mit einstellbarer Drehzahl, das für den Einsatz in sicherheits-gerichteten Anwendungen geeignet ausgeführt ist, **fungiert und aufweist:**
- mindestens ein nicht flüchtiges Speicherelement (3), welches einen Parameterdatensatz zum Betreiben dieser Sicherheitseinrichtung enthält,
- einen Schlüsselspeicher (2),
wobei der Schlüsselspeicher (2) mindestens ein nicht flüchtiges Speicherelement (6) besitzt, wobei dieses Speicherelement (6) **des Schlüsselspeichers (2)** mindestens ein Datenfeld enthält, welches eine Prüfsummeninformation einer Sicherheitseinrichtung beinhaltet,
wobei die Sicherheitseinrichtung (1) eine physikalische Schnittstelle für den Datenaustausch mit einem Schlüsselspeicher (2) zur Verfügung stellt,
**wobei der Schlüsselspeicher (2) mit der Sicherheitseinrichtung (1) über eine Vorrichtung zum Aufnehmen des Schlüsselspeichers (2) durch ein Gehäuse der Sicherheitseinrichtung (1) verbunden, insbesondere steckverbindbar, ist,**
wobei die Reichweite der physikalischen Schnittstelle räumlich begrenzt ist,
**wobei der Schlüsselspeicher (2) derart eingerichtet ist, dass er von der Sicherheitseinrichtung (1) über eine elektrisch leitende Verbindung, bestehend aus nur zwei Leitungen, insbesondere typischerweise als Eindraht-Bus realisiert, auslesbar ist,**
wobei der Schlüsselspeicher (2) ortsqebunden, **also** räumlich mit einem spezifischen Punkt innerhalb **des Gesamtsystems** fest zuordenbar, ist,
**wobei der Schlüsselspeicher (2) über ein Mittel, insbesondere einer Verbindungskette, fest mit einem Ort verbindbar ist, an dem auch die Sicherheitseinrichtung (1) im Gesamtsystem installiert ist,**
**wobei die Sicherheitseinrichtung (1), insbesondere nach einem Defekt, tauschbar ist,**
**wobei der Schlüsselspeicher (2)** einer **alten, insbesondere defekten, Sicherheitseinrichtung (1), mit** einer **neuen Sicherheitseinrichtung (1)** verbindbar ist,
wobei die Sicherheitseinrichtung (1) mindestens eine Berechnungseinheit (13) besitzt, die
**eine** Prüfsummeninformation (4) aus dem Parameterdatensatz dynamisch **berechnet,**
wobei die Sicherheitseinrichtung (1) mindestens eine Vergleichseinheit (5) besitzt, die
die im Schlüsselspeicher (2) enthaltene Prüfsummeninformation mit der dynamisch berechneten Prüfsummeninformation (4) der Sicherheitseinrichtung (1) vergleicht, und das Ergebnis der Sicherheitseinrichtung (1) als Freigabeinformation (7) zur Verfügung stellt,
wobei der Betriebszustand der Sicherheitseinrichtung (1) von dieser Freigabeinformation (7) der Vergleichseinheit (5) abhängt,
wobei eine Freigabeinformation (7), die die Gleichheit der Prüfsummeninformationen (4, 6) signalisiert, die Sicherheitseinrichtung (1) befähigt, von einem sicheren Betriebszustand in den normalen Betriebszustand, zu wechseln,
und wobei eine Freigabeinformation (7), die die Ungleichheit der Prüfsummeninformationen (4, 6) signalisiert, die Sicherheitseinrichtung (1) befähigt, in einen sicheren Betriebszustand, zu wechseln.

2. System nach Anspruch 1,
**dadurch gekennzeichnet, dass**
die Sicherheitseinrichtung (1) direkt mit einem Umrichter (8) verbindbar, insbesondere steckverbindbar, ist,
wobei ein Speichermodul (9) direkt mit dem Umrichter (8) verbunden ist, insbesondere integriert ist.

3. System nach Anspuch 1,
**dadurch gekennzeichnet, dass**
die Sicherheitseinrichtung (1) direkt mit einem Umrichter (8) verbindbar, insbesondere steckverbindbar, ist,
wobei der Umrichter (8) über ein Feldbussystem (11) mit einer übergeordneten Steuerung, insbesondere einer speicherprogrammierbaren Steuerung (12), verbunden ist,
wobei diese übergeordnete Steuerung ein Speichermodul (9) besitzt.

4. System nach Anspruch 1,
**dadurch gekennzeichnet, dass**
die Sicherheitseinrichtung (1) über ein Feldbussystem (11) mit einer übergeordneten Steuerung (12), insbesondere einer speicherprogrammierbaren Steuerung, verbindbar ist,
wobei diese übergeordnete Steuerung ein Speichermodul (9) besitzt.

5. System nach Anspruch 3 oder Anspruch 4,
**dadurch gekennzeichnet, dass**
ein Mittel, insbesondere das Parametriergerät (10), direkt mit der übergeordneten Steuerung (12), insbesondere einer speicherprogrammierbaren Steuerung, verbindbar ist.

6. System nach mindestens einem der vorangegangenen Ansprüche,
**dadurch gekennzeichnet, dass**
ein Mittel, insbesondere das Parametriergerät (10), über ein Feldbussystem (11) mit dem Umrichter (8) verbindbar ist.

7. System nach mindestens einem der vorangegangenen Ansprüche,
**dadurch gekennzeichnet, dass**
ein Mittel, insbesondere das Parametriergerät (10), direkt mit dem Umrichter (8) verbindbar ist.

8. System nach mindestens einem der vorangegangenen Ansprüche,
**dadurch gekennzeichnet, dass**
der Parameterdatensatz der Sicherheitseinrichtung (1) über ein Mittel, insbesondere über das Parametriergerät (10), veränderbar ist.

9. System nach mindestens einem der vorangegangenen Ansprüche,
**dadurch gekennzeichnet, dass**
die berechnete Prüfsummeninformation (4) des Parameterdatensatzes der Sicherheitseinrichtung (1) zusätzlich auch über die Sicherheitseinrichtung (1) in einen Schlüsselspeicher, der direkt mit dieser Sicherheitseinrichtung (1) verbunden ist, speicherbar ist.

10. System nach mindestens einem der vorangegangenen Ansprüche,
**dadurch gekennzeichnet, dass**
dieser Parameterdatensatz der Sicherheitseinrichtung (1) als Schattenkopie über ein Mittel, insbesondere über das Parametriergerät (10), in einem Speichermedium (9) außerhalb der Sicherheitseinrichtung (1) speicherbar ist.

11. **System nach mindestens einem der vorangegangenen Ansprüche,**
**dadurch gekennzeichnet, dass**
der Schlüsselspeicher (2) von der Sicherheitseinrichtung (1) über eine elektromagnetische Verbindung, insbesondere mit RFID-Technologie realisiert, auslesbar ist.

12. System nach mindestens einem der vorangegangenen Ansprüche,
**dadurch gekennzeichnet, dass**
die Sicherheitseinrichtung (1) eine Vorrichtung besitzt, mit der der Schlüsselspeicher (2) fest mit der Sicherheitseinrichtung (1) verbindbar ist, insbesondere eine Vorrichtung mit einem Mechanismus zum Verriegeln und Entriegeln der Steckverbindung.

## Claims

1. Complete system in which a safety device (1), a key store (2), a converter (8), a storage module (9), a field bus system (11), a parameterisation instrument (10) and a superordinate controller (12) are arranged,
wherein the safety device (1) functions as part of an electronic power drive system, which has an adjustable speed and is configured to be suitable for use in safety-related applications, and comprises:
- at least one non-volatile storage element (3), which contains a parameter dataset for operating said safety device,
- a key store (2),
wherein the key store (2) has at least one non-volatile storage element (6),
wherein said storage element (6) of the key store (2) contains at least one data field that includes an item of checksum information of a safety device,
wherein the safety device (1) makes a physical interface available for exchanging data with a key store (2),
wherein the key store (2) is connected, in particular can be plug-connected, to the safety device (1) through a housing of the safety device (1) by way of an apparatus for receiving the key store (2),
wherein the working range of the physical interface is limited in space,
wherein the key store (2) is configured such that it can be read out by the safety device (1) via an electrically conductive connection consisting of just two lines, typically implemented in particular as a single-wire bus,
wherein the key store (2) is location-bound, that is can be fixedly assigned in space to a specific point within the complete system,
wherein, using a means, in particular a connection chain, the key store (2) can be fixedly connected to a location at which the safety device (1) is also installed within the complete system,
wherein the safety device (1) can be swapped, in particular after a fault,
wherein the key store (2) of an old, in particular faulty, safety device (1) can be connected to a new safety device (1),
wherein the safety device (1) has at least one calculation unit (13), which dynamically calculates an item of checksum information (4) from the parameter dataset,
wherein the safety device (1) has at least one comparison unit (5), which compares the checksum information included in the key store (2) with the dynamically calculated checksum information (4) of the safety device (1), and makes the result available to the safety device (1) as release information (7),
wherein the operating state of the safety device (1) is dependent on said release information (7) of the comparison unit (5),
wherein an item of release information (7) that signals that the items of checksum information (4, 6) are identical enables the safety device (1) to switch from a safe operating state to the normal operating state,
and wherein an item of release information (7) that signals that the items of checksum information (4, 6) are not identical enables the safety device (1) to switch to a safe operating state.

2. System according to claim 1,
**characterised in that**
the safety device (1) can be directly connected, in particular plug-connected, to a converter (8),
wherein a storage module (9) is directly connected to the converter (8), in particular integrated therewith.

3. System according to claim 1,
**characterised in that**
the safety device (1) can be directly connected, in particular plug-connected, to a converter (8),
wherein the converter (8) is connected to a superordinate controller, in particular a programmable logic controller (12), by means of a field bus system (11),
wherein said superordinate controller has a storage module (9).

4. System according to claim 1,
**characterised in that**
the safety device (1) can be connected to a superordinate controller (12), in particular a programmable logic controller, by means of a field bus system (11),
wherein said superordinate controller has a storage module (9).

5. System according to claim 3 or claim 4,
**characterised in that**
a means, in particular the parameterisation instrument (10), can be connected directly to the superordinate controller (12), in particular a programmable logic controller.

6. System according to at least one of the preceding claims,
**characterised in that**
a means, in particular the parameterisation instrument (10), can be connected to the converter (8) by means of a field bus system (11).

7. System according to at least one of the preceding claims,
**characterised in that**
a means, in particular the parameterisation instrument (10), can be directly connected to the converter (8).

8. System according to at least one of the preceding claims,
**characterised in that**
the parameterisation dataset of the safety device (1) can be changed using a means, in particular using the parameterisation instrument (10).

9. System according to at least one of the preceding claims,
**characterised in that**
by way of the safety device (1), the calculated checksum information (4) of the parameter dataset of the safety device (1) can additionally be stored in a key store that is directly connected to said safety device (1).

10. System according to at least one of the preceding claims,
**characterised in that**
said parameterisation dataset of the safety device (1) can be stored as a shadow copy in a storage medium (9) outside the safety device (1) using a means, in particular using the parameterisation instrument (10).

11. System according to at least one of the preceding claims,
**characterised in that**
the key store (2) can be read out by the safety device (1) via an electromagnetic connection, in particular using RFID technology.

12. System according to at least one of the preceding claims,
**characterised in that**
the safety device (1) has an apparatus by which the key store (2) can be fixedly connected to the safety device (1), in particular an apparatus having a mechanism for locking and unlocking the plug-in connection.

## Revendications

1. Système global dans lequel sont intégrés un dispositif de sécurité (1), une mémoire clé (2), un convertisseur (8), un module de mémorisation (9), un système de bus de terrain (11), un appareil de paramétrage (10) et une commande (12) de niveau supérieur,
sachant que le dispositif de sécurité (1) remplit la fonction d'une partie d'un système électronique d'entraînement de puissance à vitesse angulaire réglable, dont la réalisation se prête à l'utilisation dans des applications ciblant la sécurité, et qu'il comprend :
- au moins un élément (3) de mémorisation non volatile, renfermant un ensemble de données de paramétrage en vue d'actionner ce dispositif de sécurité,
- une mémoire clé (2),
laquelle mémoire clé (2) est dotée d'au moins un élément (6) de mémorisation non volatile,
cet élément de mémorisation (6) de ladite mémoire clé (2) renfermant au moins un champ de données qui contient une information de somme de contrôle d'un dispositif de sécurité, ledit dispositif de sécurité (1) procurant un interface physique dédié à l'échange de données avec une mémoire clé (2),
la mémoire clé (2) étant connectée au dispositif de sécurité (1), notamment connectée par enfichage, par l'intermédiaire d'un agencement conçu pour recevoir ladite mémoire clé (2) au moyen d'un boîtier dudit dispositif de sécurité (1),
le rayon d'action de l'interface physique étant limité dans l'espace,
sachant que la mémoire clé (2) est conçue de façon telle qu'elle puisse être lue, par le dispositif de sécurité (1), par l'intermédiaire d'une jonction électriquement conductrice composée uniquement de deux lignes, typiquement concrétisée en tant que bus unifilaire en particulier,
ladite mémoire clé (2) étant liée à un emplacement, c'est-à-dire qu'elle peut être fermement consignée dans l'espace, avec un point spécifique à l'intérieur du système global,
ladite mémoire clé (2) pouvant être reliée rigidement par l'intermédiaire d'un moyen, en particulier d'une chaîne de liaison, à un emplacement auquel le dispositif de sécurité (1) est, lui aussi, installé dans le système global,
lequel dispositif de sécurité (1) peut être remplacé, notamment après une défaillance,
la mémoire clé (2) d'un ancien dispositif de sécurité (1), en particulier défectueux, pouvant être connectée à un nouveau dispositif de sécurité (1),
le dispositif de sécurité (1) étant muni d'au moins une unité calculatrice (13), qui calcule dynamiquement une information de somme de contrôle (4) à partir de l'ensemble de données de paramétrage,
ledit dispositif de sécurité (1) étant pourvu d'au moins une unité comparatrice (5) qui compare l'information de somme de contrôle, contenue dans la mémoire clé (2), à l'information de somme de contrôle (4) dudit dispositif de sécurité (1), calculée dynamiquement, et qui fournit le résultat audit dispositif de sécurité (1), en tant qu'information de validation (7),
l'état de fonctionnement dudit dispositif de sécurité (1) étant tributaire de cette information de validation (7) de ladite unité comparatrice (5),
sachant qu'une information de validation (7), signalant l'égalité des informations de somme de contrôle (4, 6), rend le dispositif de sécurité (1) apte à passer d'un état de fonctionnement sûr à un état de fonctionnement normal,
et sachant qu'une information de validation (7), signalant l'inégalité desdites informations de somme de contrôle (4, 6), rend ledit dispositif de sécurité (1) apte à passer à un état de fonctionnement sûr.

2. Système selon la revendication 1,
**caractérisé par le fait que**
le dispositif de sécurité (1) peut être directement connecté à un convertisseur (8), par enfichage en particulier,
sachant qu'un module de mémorisation (9) est directement connecté audit convertisseur (8), et est notamment intégré.

3. Système selon la revendication 1,
**caractérisé par le fait que**
le dispositif de sécurité (1) peut être directement connecté à un convertisseur (8), par enfichage en particulier,
lequel convertisseur (8) est connecté, par l'intermédiaire d'un système de bus de terrain (11), à une commande de niveau supérieur et notamment à une commande logique programmable (12),
cette commande de niveau supérieur étant dotée d'un module de mémorisation (9).

4. Système selon la revendication 1,
**caractérisé par le fait que**
le dispositif de sécurité (1) peut être connecté, par l'intermédiaire d'un système de bus de terrain (11), à une commande (12) de niveau supérieur et notamment à une commande logique programmable,
cette commande de niveau supérieur étant pourvue d'un module de mémorisation (9).

5. Système selon la revendication 3 ou la revendication 4,
**caractérisé par le fait**
**qu'**un moyen, en particulier l'appareil de paramétrage (10), peut être directement connecté à la commande (12) de niveau supérieur et notamment à une commande logique programmable.

6. Système selon au moins l'une des revendications précédentes,
**caractérisé par le fait**
**qu'**un moyen, en particulier l'appareil de paramétrage (10), peut être connecté au convertisseur (8) par l'intermédiaire d'un système de bus de terrain (11).

7. Système selon au moins l'une des revendications précédentes,
**caractérisé par le fait**
**qu'**un moyen, en particulier l'appareil de paramétrage (10), peut être directement connecté au convertisseur (8).

8. Système selon au moins l'une des revendications précédentes,
**caractérisé par le fait que**
l'ensemble de données de paramétrage du dispositif de sécurité (1) peut être modifié par l'intermédiaire d'un moyen, notamment par l'intermédiaire de l'appareil de paramétrage (10).

9. Système selon au moins l'une des revendications précédentes,
**caractérisé par le fait que**
l'information calculée de somme de contrôle (4) de l'ensemble de données de paramétrage du dispositif de sécurité (1) peut aussi être additionnellement mémorisée, par l'intermédiaire dudit dispositif de sécurité (1), dans une mémoire clé directement connectée à ce dispositif de sécurité (1).

10. Système selon au moins l'une des revendications précédentes,
**caractérisé par le fait que**
cet ensemble de données de paramétrage du dispositif de sécurité (1) peut être mémorisé en tant que cliché instantané, par l'intermédiaire d'un moyen et notamment par l'intermédiaire de l'appareil de paramétrage (10), dans un support de stockage (9) à l'extérieur dudit dispositif de sécurité (1).

11. Système selon au moins l'une des revendications précédentes,
**caractérisé par le fait que**
la mémoire clé (2) peut être lue par le dispositif de sécurité (1) par l'intermédiaire d'une liaison électromagnétique concrétisée, en particulier, par une technologie RFID.

12. Système selon au moins l'une des revendications précédentes,
**caractérisé par le fait que**
le dispositif de sécurité (1) est muni d'un agencement par lequel la mémoire clé (2) peut être connectée rigidement audit dispositif de sécurité (1), en particulier d'un agencement équipé d'un mécanisme de verrouillage et de déverrouillage de la connexion enfichée.
